**Europäisches Patentamt**

**European Patent Office**

**Office européen des brevets**

(19)

(11) Veröffentlichungsnummer: **0 133 645**
**B1**

(12) # EUROPÄISCHE PATENTSCHRIFT

(45) Veröffentlichungstag der Patentschrift:
09.03.88

(21) Anmeldenummer: 84107557.5

(22) Anmeldetag: 29.06.84

(51) Int. Cl.⁴: **B 24 B 23/02**

(54) **Winkelschleifer mit einer Sicherheitskupplung.**

(30) Priorität: 11.08.83 DE 3328955

(43) Veröffentlichungstag der Anmeldung:
06.03.85 Patentblatt 85/10

(45) Bekanntmachung des Hinweises auf die Patenterteilung:
09.03.88 Patentblatt 88/10

(84) Benannte Vertragsstaaten:
DE FR GB IT

(56) Entgegenhaltungen:
DE - B - 2 158 598
DE - B - 2 522 446
GB - A - 1 095 068
US - A - 3 398 611

(73) Patentinhaber: ROBERT BOSCH GMBH, Postfach 50,
D-7000 Stuttgart 1 (DE)

(72) Erfinder: Schädlich, Fritz, Dipl.-Ing., Panoramastrasse 4,
D-7022 Leinfelden-Echterdingen (DE)
Erfinder: Börner, Gerhard, Uhlandstrasse 5,
D-7112 Waldenburg (DE)

EP 0 133 645 B1

ACTORUM AG

## Beschreibung

### Stand der Technik

Die Erfindung geht aus von einem Winkelschleifer nach der Gattung des Hauptanspruchs. Ein solcher Winkelschleifer ist z.B. vorbekannt durch die DE-AS 2 158 598. Dort ist eine Rutschkupplung zwischen die Arbeitsspindel und den Kraftantrieb eingeschaltet, die nach dem Ansprechen bei einem zu hohen Drehmoment auch bei danach gleitender Reibung zwischen den Kupplungsteilen noch ein erhebliches Drehmoment überträgt. Dieses Drehmoment bedeutet für den Bedienenden deshalb auch nach dem Ansprechen der Rutschkupplung noch eine Gefahr.

### Vorteile der Erfindung

Der erfindungsgemässe Winkelschleifer mit den kennzeichnenden Merkmalen des Hauptanspruchs hat demgegenüber den Vorteil, dass nach dem Ansprechen der Sicherheitskupplung die Arbeitsspindel mit dem Werkzeug vollständig vom Kraftantrieb getrennt ist. Die eingesetzte, an sich für Schrauber bekannte Klauenkupplung bewirkt beim Überschreiten eines voreingestellten Übertragungsdrehmomentes eine sofortige Trennung des Werkzeuges vom Antrieb. Dabei sorgen Mittel zur Drehzahlanpassung zwischen der leerlaufenden Arbeitsspindel und dem Kraftantrieb im ausgekuppelten Zustand der Sicherheitskupplung für ein schonendes Wiedereinkuppeln.

Durch die in den Unteransprüchen aufgeführten Massnahmen sind vorteilhafte Weiterbildungen und Verbesserungen des im Hauptanspruch angegebenen Winkelschleifers möglich. Besonders vorteilhaft, vor allem für das sichere und schonende Wiedereinkuppeln, ist das Einbringen eines Synchronringes zwischen die Kupplungsteile der Klauenkupplung, der dazu dient, vor dem Wiedereinkuppeln die Drehzahl der leerlaufenden Arbeitsspindel der Drehzahl des Kraftantriebs anzupassen. Ein gedämpftes abbaufähiges Luftpolster zwischen dem Synchronring und dem ihn aufnehmenden Kupplungsteil schaft die notwendige Zeit für die erforderliche Drehzahlanpassung.

### Zeichnung

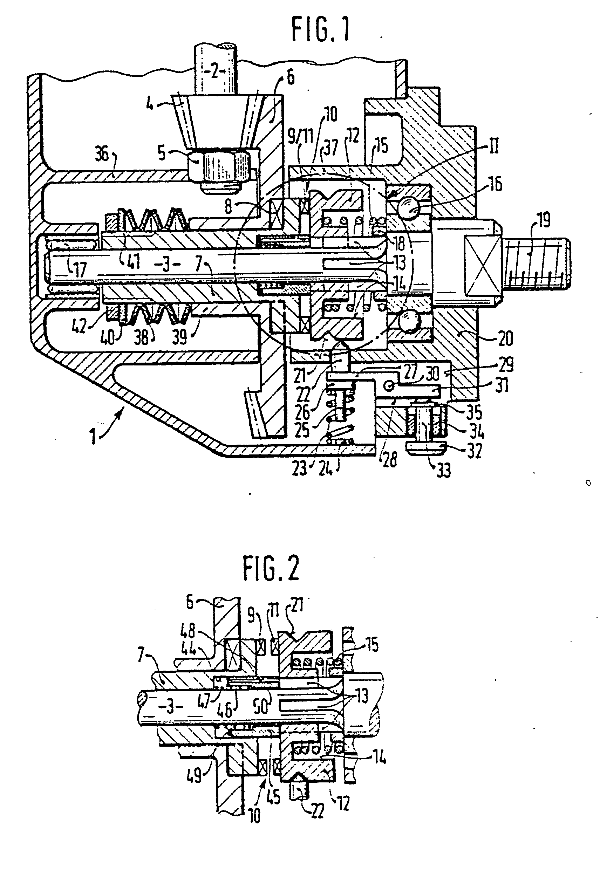

Ein Ausführungsbeispiel des Erfindungsgegenstandes ist in der Zeichnung dargestellt und in der nachfolgenden Beschreibung näher erläutert. Es zeigen Figur 1 einen Schnitt durch den Getriebekopf eines Winkelschleifers längs der Arbeitsspindel und Figur 2 einen Teilschnitt aus dem Bereich II gemäss Figur 1.

### Beschreibung des Ausführungsbeispiels

In einem Winkelschleifer 1 mit einer von einem nicht dargestellten Motor angetriebenen Antriebswelle 2 ist eine Arbeitsspindel 3 gelagert. Die Antriebswelle 2 trägt ein Kegelzahnritzel 4, das mit einer Mutter 5 befestigt ist. Das Kegelzahnritzel 4 greift ein in ein Kegeltellerrad 6, das mittels einer Kupplungsbuchse 7 auf der Arbeitsspindel 3 lagert. Die Kupplungsbuchse 7 und das Kegeltellerrad 6 sind durch eine Überrastkupplung 8 so miteinander verbunden, dass beim Auftreten eines überhöhten Übertragungsdrehmomentes zwischen dem Kegeltellerrad 6 und der Kupplungsbuchse 7 die Zahnrücken der einzelnen Zähne der Überrastkupplung 8 aufeinander aufgleiten und so die Kupplungsbuchse 7 zum werkzeugseitigen Ende der Arbeitsspindel 3 hin verschieben. Die Kupplungsbuchse 7 besitzt an ihrer der Überrastkupplung 8 abgewendeten Stirnfläche Zähne 9 einer Klauenkupplung 10. Diese Zähne 9 sind zum Zusammenwirken mit anderen Zähnen 11 der Klauenkupplung 10 bestimmt, die an der ihnen zugewendeten Stirnseite eines Kupplungskörpers 12 angebracht sind. Der Kupplungskörper 12 lagert auf der Arbeitsspindel 3 axial verschiebbar und durch eine Keilwellenverbindung 13 gegen Verdrehen gesichert. Er besitzt einen axialen Einstich 14, in den eine Druckfeder 15 eingesetzt ist. Das freie Ende dieser Druckfeder 15 stützt sich ab am Innenring eines Kugellagers 16, das, zusammen mit einem Nadellager 17, der Lagerung der Arbeitsspindel 3 dient. Ein Ring 18 auf der Arbeitsspindel 3 zentriert das am Kugellager 16 anliegende Ende der Druckfeder 15. Ein Zapfen 19 der Arbeitsspindel 3 dient der Aufnahme einer nicht dargestellten Schleifscheibe. Während das Nadellager 17 im Gehäuse des Winkelschleifers 1 lagert, wird das Kugellager 16 durch eine Gehäusekappe 20 aufgenommen. In seinem Mantel besitzt der Kupplungskörper 12 einen keilförmigen Einstich 21. Ein radial beweglich in einer Bohrung der Gehäusekappe 20 gelagerten Bolzen 22 hat eine Spitze, die in diesen keilförmigen Einstich 21 passt. Der Bolzen 22 ist unter die Wirkung einer Druckfeder 23 gestellt, die ihr Widerlager an einer Innenwand des Gehäuses des Winkelschleifers 1 findet. Ein Nocken 24 zentriert sie dort. Ein Zapfen 25 am Bolzen 22 sichert dort die Druckfeder 23 gegen Abgleiten. Das Ende der Druckfeder 23 stützt sich gegen einen Bund 26 des Bolzens 22 ab. An die der Druckfeder 23 gegenüberliegende Stirnfläche des Bundes 26 legt sich das gabelförmige Ende 27 eines zweiarmigen Hebels 28 an. Der zweiarmige Hebel 28 lagert in einer Ausnehmung 29 in der Gehäusekappe 20, schwenkbar um einen Stift 30. Der zweite Hebelarm 31 des Hebels 28 liegt unter einem Drücker 32. Dessen Schaft 33 ist in einer Buchse 34 geführt und durch einen Sprengring 35 gegen Herausziehen gesichert. Eine ringförmige Rippe 36 im Gehäuse des Winkelschleifers 1 und eine dieser gegenübergestellte ringförmige Rippe 37 in der Gehäusekappe 20 bestimmen die axiale Lage des Kegeltellerrades 6 im Gehäuse des Winkelschleifers 1. Die Relativlage des Kegeltellerrades 6 zur Kupplungsbuchse 7 ist durch die Eingriffstellung der Überrastkupplung 8 und eine Federscheibenpackung 38 bestimmt. Dabei stützt sich diese Federscheibenpackung 38 einmal an der Stirnfläche einer Nabe 39 des Kegeltellerrades 6 und zum anderen an einer Scheibe 40 ab. Die Scheibe 40 ist auf das vom Kegeltellerrad 6 abgewendete Ende der Kupplungsbuchse 7 aufgeschoben, das mit einem Gewinde 41 versehen ist. Auf das Gewinde 41 ist eine Mutter 42 aufgeschraubt, mit der die Vorspannung der Federscheibenpackung 38 und damit das Ausrückmoment der Überrastkupplung 8 in Grenzen einstellbar ist.

Eine Synchronisiervorrichtung zwischen der Kupplungsbuchse 7 und dem Kupplungskörper 12 ist in Figur 2 vergrössert dargestellt. In eine topfförmige Ausdrehung 44 ist ein Synchronring 45 eingesetzt und zugleich auf die Arbeitsspindel 3 aufgesetzt. In eine Freidrehung 46 dieses Synchronringes 45 ist eine Druckfeder 47 eingesetzt und so zwischen den Synchronring 45 und die Kupplungsbuchse 7 gespannt. Von der inneren Stirnfläche des Synchronringes 45 führt ein Entlüftungskanal 48 zu einem Teil der Mantelfläche des Synchronringes 45 der stets von den Kupplungsteilen 7 und 12 freibleibt. Die stirnseitige Mündung dieses Entlüftungskanals 48 ist durch eine Ventilklappe 49 federnd verschlossen, die an diese Stirnfläche in einem begrenzten Bereich angeklebt ist. Zwischen der Welle 3 und dem Synchronring 45 ist ein ringförmiger Drosselspalt 50 gebildet. Die Stirnseiten der Zähne der Keilwellenverbindung 13 bieten dem Synchronring 45 einen axialen Anschlag, der Synchronring 45 kann in der Ausdrehung 44 in bekannter Weise durch eine Nut-Feder-Verbindung gegen Verdrehen gesichert sein In der Regel wird es jedoch genügen, dass der Synchronring 45 durch die Reibung der Druckfeder 47 an der Kupplungsbuchse 7 und am Synchronring 45 mitgenommen wird. Die Kraft der Druckfedern 15 und 47 ist so aufeinander abgestimmt, dass die Druckfeder 15 die Druckfeder 47 leicht überwinden kann.

Wenn mittels der Mutter 42 das Ausrückmoment der Überrastkupplung 8 auf den zu fordernden Sicherheitsgrenzwert eingestellt ist, kann mit dem Winkelschleifer 11 gearbeitet werden. Klemmt sich eine Schleifscheibe, die auf den Zapfen 19 der Arbeitsspindel 3 aufgespannt ist, an einem Werkstück fest, so gleiten die Rücken der Zähne der Überrastkupplung 8 aufeinander auf. Dabei wird die Kupplungsbuchse 7 in der Darstellung nach den Figuren 1 und 2 nach rechts verschoben, bis der Bolzen 22 mit seiner Spitze in den keilförmigen Einstich 21 einfallen kann (Figur 2). Sofort danach gleiten die Spitzen der Zähne der Überrastkupplung 8 übereinander ab, in die Einraststellung der Überrastkupplung 8. Dabei löst sich schlagartig die Kupplungsverbindung der Klauenkupplung 10 mit den Zähnen 9 und 11. Mit dem so erfolgten Trennen des Kraftantriebs vom Werkzeug entfällt auch das auf den Bedienenden wirkende Rückdrehmoment am Winkelschleifer 1. Zum Wiedereinrücken der Klauenkupplung 10 drückt der Bedienende den Drücker 32 nieder. Über den Hebel 28 wird damit der Bolzen 22 aus dem keilförmigen Einstich 21 im Kupplungskörper 12 ausgehoben. Die Druckfeder 15 drückt den Kupplungskörper 12 in den Darstellungen nach links, gegen den Synchronring 45. Das in der Ausdrehung 44 befindliche Luftpolster kann bei geschlossener Ventilklappe 49 nur über den Drosselspalt 50 entlüftet werden. So wird der Eingriff der Zähne 9 und 11 solange verzögert, bis durch den Reibungsschluss des Synchronringes 45 zum Kupplungskörper 12 dieser Kupplungskörper 12 wenigstens nahezu die gleiche Drehzahl hat wie die Kupplungsbuchse 7. Damit ist ein schonender Wiedereingriff der Klauenkupplung 10 gewährleistet. Der hierfür getriebene Aufwand ist denkbar gering. Es werden lediglich zwei zusätzliche Bauteile benötigt. Selbstverständlich kann, wenn es zweckmässiger erscheint, der Drosselspalt 50 weg von der Arbeitsspindel 3 zwischen die Kupplungsbuchse 7 und den Synchronring 45 gelegt werden.

## Patentansprüche

1. Winkelschleifer mit einer Sicherheitskupplung zum Absenken des Antriebsdrehmoment beim Blockieren des Werkzeugs, dadurch gekennzeichnet, dass die Arbeitsspindel (3) des Winkelschleifers (1), mittels einer an sich bekannten, beim Auftreten eines Grenzdrehmomentes selbsttätig ausrückenden und im ausgerückten Zustand gehaltenen Klauenkupplung (10), an den Kraftantrieb (2) des Winkelschleifers (1) angekuppelt ist und dass der Winkelschleifer mit Mitteln (45) zur Drehzahlanpassung zwischen der leerlaufenden Arbeitsspindel (3) und dem Kraftantrieb (2) im ausgekuppelten Zustand seiner Sicherheitskupplung (8, 10) versehen ist.

2. Winkelschleifer nach Anspruch 1, dadurch gekennzeichnet, dass zwischen die Kupplungsteile (7, 12) der Klauenkupplung (10) ein Synchronring (45) eingelegt ist.

3. Winkelschleifer nach Anspruch 2, dadurch gekennzeichnet, dass der Synchronring (45) gleichachsig mit den Kupplungsteilen (7, 12) und in eine Ausdrehung (44) des Kupplungsteils (7) eintauchend gelagert und unter der Wirkung einer Druckfeder (47) zwischen die Kupplungsteile (7, 12) eingespannt ist.

4. Winkelschleifer nach Anspruch 3, dadurch gekennzeichnet, dass der Synchronring (45) mindestens einen von seiner ausdrehungsseitigen Stirnfläche zu seiner zwischen den Kupplungsteilen (7, 12) freien Mantelfläche reichenden Entlüftungskanal (48) hat, der mittels eines Rückschlagventils (49) mindestens teilweise schliessbar ausgebildet ist.

5. Winkelschleifer nach Anspruch 4, dadurch gekennzeichnet, dass das Ventil (49) oder der Synchronring (45) mit der Ausdrehung (44) oder der Synchronring mit der Arbeitsspindel (3) eine Drossel (50) für das Durchströmen von in der Ausdrehung (44) eingeschlossener Luft bildet, so dass die Einwärtsbewegung des Synchronringes (45) in die Ausdrehung (44) durch das in der Ausdrehung (44) befindliche Luftpolster gedämpft wird.

6. Winkelschleifer nach Anspruch 4, dadurch gekennzeichnet, dass das Ventil eine ringförmige, federnde Scheibe (49) ist, die gegebenenfalls aufgeschlitzt, an die ausdrehungsseitige Stirnfläche des Synchronringes (45) in einem begrenzten Bereich angeklebt ist.

7. Winkelschleifer nach Anspruch 3, dadurch gekennzeichnet, dass die Austrittsbewegung des Synchronringes (45) aus der Ausdrehung (44) durch einen Anschlag (13) so begrenzt ist, dass die völlig ausgerückte Klauenkupplung (10) auch ohne Reibungsschluss der Kupplungsteile (7, 12) über den Synchronring (45) bleibt.

## Claims

1. Right angle grinder with a safety clutch for lowering the drive torque when the tool is blocked, characterized in that the working spindle (3) of the right angle grinder (1), by means of a dog clutch (10) which is known per se, disengages automatically when a limiting torque occurs and is held in the disengaged state, is coupled to the power drive (2) of the right angle grinder (1), and that the right angle grinder is provided with means (45) for adapting the rotational speed between the idling working spindle (3) and the power drive (2) in the uncoupled state of its safety clutch (8, 10).

2. Right angle grinder according to Claim 1, characterized in that a synchronizing ring (45) is inserted between the clutch parts (7, 12) of the dog clutch (10).

3. Right angle grinder according to Claim 2, characterized in that the synchronizing ring (45) is mounted on the same axis as the clutch parts (7, 12) and in such a way that it plunges into a bored portion (44) of the clutch part (7), and is clamped between the clutch parts (7, 12) under the action of a compressing spring (47).

4. Right angle grinder according to Claim 3, characterized in that the synchronizing ring (45) has at least one vent channel (48) which extends from its end face on the bored-portion side to its free circumferential surface between the clutch parts (7, 12) and is designed such that it can be closed at least partly by means of a non-return valve (49).

5. Right angle grinder according to Claim 4, characterized in that the valve (49) or the synchronizing ring (45) with the bored portion (44), or the synchronizing ring with the working spindle (3), forms a choke (50) for the through-flow of air enclosed in the bored portion (44) so that the inward movement of the synchronizing ring (45) into the bored portion (44) is dampened by the air cushion located in the bored portion (44).

6. Right angle grinder according to Claim 4, characterized in that the valve is an annular, elastic disc (49) which, if necessary split, is adhesively bonded within a limited area to the end face of the synchronizing ring (45) on the bored-portion side.

7. Right angle grinder according to Claim 3, characterized in that the withdrawal movement of the synchronizing ring (45) from the bored portion (44) is limited by a stop (13) in such a way that the fully disengaged dog clutch (10), even withoug frictional contact of the clutch parts (7, 12), remains over the synchronizing ring (45).

## Revendications

1. Meuleuse d'angle comportant un embrayage de sécurité pour abaisser le couple de rotation de l'entraînement lors du blocage de l'outil, caractérisé en ce que l'arbre moteur (3) de la meuleuse d'angle (1) est accouplé de façon connue en soi, au moyen d'un embrayage à griffe (10) désembrayable automatiquement de l'entraînement mécanique (2) de la meuleuse d'angle (1) et maintenu à l'état débrayé en cas d'atteinte d'un couple limite et en ce que la meuleuse d'angle reste pour l'adaptation de la vitesse de rotation entre l'arbre d'entraînement (3) tournant à vide, et l'entraînement mécanique (2) à l'état désembrayé de son embrayage de sécurité (8, 10).

2. Meuleuse d'angle selon la revendication 1, caractérisée en ce qu'entre les éléments d'embrayage (7, 12) de l'embrayage à griffe (10), on intercale une bague de synchronisation (45).

3. Meuleuse d'angle selon la revendication 2, caractérisée en ce que la bague de synchronisation (45) est placée coaxialement aux éléments d'embrayage (7, 12) et à l'intérieur d'un alésage (44) de l'élément d'embrayage (7) et elle est serrée par l'action d'un ressort (47) entre les éléments d'embrayage (7, 12).

4. Meuleuse d'angle selon la revendication 3, caractérisée en ce que la bague de synchronisation (45) comporte au moins un canal de purge (48) allant de sa surface frontale du côté alésage à sa surface d'enveloppe libre entre les éléments d'embrayage (7, 12), qui est formé au moyen d'un clapet antiretour (49) et peut être au moins partiellement obturé.

5. Meuleuse d'angle selon la revendication 4, caractérisée en ce que le clapet (49) ou la bague de synchronisation (45) forment avec l'alésage (44) ou la bague de synchronisation avec l'arbre d'entraînement (3) un étranglement (50) pour l'écoulement de l'air enfermé dans l'alésage (44), de sorte que le mouvement de pénétration de la bague de synchronisation (45) dans l'alésage (44) soit amorti par le coussin d'air s'y trouvant.

6. Meuleuse d'angle selon la revendication 4, caractérisée en ce que le clapet est une rondelle élastique annulaire (49) éventuellement fendue, qui est collée sur une zone limitée sur la surface frontale côté alésage de la bague de synchronisation (45).

7. Meuleuse d'angle selon la revendication 3, caractérisée en ce que le mouvement de sortie de l'alésage (44) de la bague de synchronisation (45) est limitée par une butée (13) de sorte que l'embrayage à griffe (10) reste complètement désengagé sans aucun entraînement par frictions des éléments d'embrayage (7, 12) sur la bague de synchronisation (45).

# FIG. 1

# FIG. 2